# EUROPEAN PATENT APPLICATION

(11) **EP 2 787 203 A1**
(43) Date of publication of application: **08.10.2014**
(21) Application number: 11876529.6
(22) Date of filing: 01.12.2011
(51) Int. Cl.: F02D 41/04, F02D 41/14, F02D 41/34

(54) **CONTROL DEVICE FOR INTERNAL COMBUSTION ENGINE**

(71) Applicant: TOYOTA JIDOSHA KABUSHIKI KAISHA, Toyota-shi, Aichi-ken, 471-8571 (JP)
(72) Inventor: NISHIKIORI, Takashi, Toyota-shi, Aichi-ken, 471-8571 (JP)
(74) Representative: TBK
(86) International application number: PCT/JP2011/077833
(87) International publication number: WO 2013/080362

(57) **Abstract**

A control apparatus for an internal combustion engine (10) in the present invention includes: a turbo-supercharger (24) that supercharges intake air; a port injection valve (38) and an in-cylinder injection valve (40) that inject fuel into the internal combustion engine (10); and catalysts (58, 60). The control apparatus determines whether or not blow-by of gas to an exhaust passage (18) from an intake passage (16) through a combustion chamber (14) occurs, or whether or not a condition in which the blow-by of gas is likely to occur is satisfied. If the determination is affirmative, the control apparatus sets the fuel injection timing for the port injection valve (38) or the in-cylinder injection valve (40) so as to execute fuel injection after an exhaust valve (48) is closed. Further, if the aforementioned determination is affirmative, the control apparatus sets the fuel injection amount so that the air-to-fuel ratio defined using the amount of air passing through the intake valve coincides with a value leaner than the stoichiometric air-to-fuel ratio.

## Description

### Technical Field

The present invention relates to a control apparatus for an internal combustion engine, and more particular to a control apparatus for an internal combustion engine that is suitable for controlling an supercharger-equipped internal combustion engine.

### Background Art

So far, for example, Patent Document 1 discloses an internal combustion engine having a turbo-supercharger. In this conventional internal combustion engine, the amount of blow-by of fresh air that blows through a combustion chamber to an exhaust passage from an intake passage is estimated on the basis of, for example, the oxygen concentration (air-to-fuel ratio) of exhaust gas detected by an air-to-fuel ratio sensor. Further, a target air-to-fuel ratio and a target ignition timing are corrected on the basis of the estimated amount of blow-by of fresh air.

More specifically, Patent Document 1 discloses that since, as the amount of blow-by of fresh air decreases, an in-cylinder scavenging action (scavenging effect) during a valve overlap period weakens to increase an in-cylinder residual gas, knock becomes likely to occur. Further, in Patent Document 1, making rich the air-to-fuel ratio (an increase in fuel injection amount) is performed in accordance with a decrease in the amount of blow-by of fresh air, that is to say, a weakness in the in-cylinder scavenging action.

If the fuel injection amount is increased as disclosed in Patent Document 1 in a situation in which blow-by of fresh air is occurring, a part of the injected fuel may be blown to the exhaust passage as well as the fresh air, or a gas including unburned fuel in a cylinder (a gas air-to-fuel ratio of which is richer than the stoichiometric air-to-fuel ratio) may be discharged to the exhaust passage. If the unburned fuel that is introduced into the exhaust passage as described above flows into a catalyst to bring about chemical reactions with oxygen trapped (stored) in the catalyst, the temperature of the catalyst rapidly rises. As a result of this, there is a concern that the deterioration of the catalyst may be facilitated.

Including the above described document, the applicant is aware of the following documents as related art of the present invention.

### Citation List

### Patent Documents

Patent Document 1: Japanese Laid-open Patent Application Publication No. 2007-263082
Patent Document 2: Japanese Laid-open Patent Application Publication No. 2007-263083
Patent Document 3: Japanese Laid-open Patent Application Publication No. 2008-75549
Patent Document 4: Japanese Laid-open Patent Application Publication No. 2010-216464

### Summary of Invention

The present invention has been made to solve the problem as described above, and has its object to provide a control apparatus for an internal combustion engine which can prevent combustion of unburned fuel from occurring inside a catalyst while increasing the torque of the internal combustion engine using scavenging effect.

The present invention is a control apparatus for an internal combustion engine that includes: a supercharger; a fuel injection valve; a catalyst; injection timing setting means; intake valve passing-through air amount obtaining means; and fuel injection amount controlling means.

The supercharger supercharges intake air. The fuel injection valve injects fuel into the internal combustion engine. The catalyst is installed in an exhaust passage and is capable of purifying exhaust gas. When blow-by of gas to the exhaust passage from an intake passage through a combustion chamber occurs or when a condition in which the blow-by of gas is likely to occur is satisfied, the injection timing setting means sets a fuel injection timing for the fuel injection valve so that fuel injection is executed after an exhaust valve is closed. The intake valve passing-through air amount obtaining means obtains the amount of air passing through an intake valve. The fuel injection amount controlling means sets a fuel injection amount so that when the blow-by of gas occurs or the condition in which the blow-by of gas is likely to occur is satisfied, an air-to-fuel ratio defined using the amount of air passing through the intake valve becomes a value leaner than a stoichiometric air-to-fuel ratio.

According to the present invention, the setting of the fuel injection timing by the fuel injection amount controlling means can prevent fuel from blowing to the exhaust passage as well as fresh air during the valve overlap period. Further, according to the setting of the fuel injection timing by the fuel injection amount controlling means, although the air-to-fuel ratio defined using the amount of air passing through the intake valve becomes leaner than the stoichiometric air-to-fuel ratio, the fuel injection amount can be set so that the air-to-fuel ratio that is defined using the in-cylinder charged air amount that is obtained by subtracting the amount of blow-by of fresh air from the amount of air passing through the intake valve becomes a value near the stoichiometric air-to-fuel ratio. Consequently, the exhaust gas (burned gas) discharged from the cylinder can be prevented from including unburned fuel. The control of the present embodiment can therefore achieve the prevention of the blow-by of unburned fuel to the exhaust passage and the prevention of the discharge of unburned fuel from the cylinder. This makes it possible to prevent oxygen trapped (stored) in the catalyst from bringing about an oxygen reaction with unburned fuel inside the catalyst, and to thereby prevent the temperature of the catalyst from rapidly rising at the time of occurrence of the blow-by of gas. In addition, according to the present invention, the air-to-fuel ratio defined using the in-cylinder charged air amount can be put close to the stoichiometric air-to-fuel ratio even when such control of the fuel injection amount is being performed. Therefore, the present invention can prevent the deterioration of the catalyst from being facilitated while ensuring an increase in the torque of the internal combustion engine by use of the scavenging effect.

Moreover, the control apparatus for the internal combustion engine in the present invention may further comprises catalyst temperature determination means that determines whether or not the temperature of the catalyst is higher than a predetermined value. Further, the fuel injection amount controlling means may set a fuel injection amount so that when the blow-by of gas occurs or the condition in which the blow-by of gas is likely to occur is satisfied and the temperature of the catalyst is higher than the predetermined value, the air-to-fuel ratio defined using the amount of air passing through the intake valve becomes a value leaner than the stoichiometric air-to-fuel ratio.

This makes it possible to prevent the deterioration of the catalyst from being facilitated while ensuring an increase in the torque of the internal combustion engine by use of the scavenging effect in a situation such that the deterioration of the catalyst is concerned due to the fact that the temperature of the catalyst is high.

Moreover, the control apparatus for the internal combustion engine in the present invention may further comprises an air-to-fuel ratio sensor that is installed in the exhaust passage on the upstream side of the catalyst to detect an air-to-fuel ratio of exhaust gas at the upstream of the catalyst. Further, the fuel injection amount controlling means may include air-to-fuel ratio lean-correction means that corrects the fuel injection amount so that the air-to-fuel ratio of exhaust gas detected by the air-to-fuel ratio sensor becomes a value leaner than the stoichiometric air-to-fuel ratio.

This makes it possible to set the fuel injection amount so that the air-to-fuel ratio defined using the amount of air passing through the intake valve coincides with a value leaner than the stoichiometric air-to-fuel ratio, by use of the air-to-fuel lean-correction means that corrects the fuel injection amount so that the air-to-fuel ratio of exhaust gas detected by the air-to-fuel ratio sensor coincides with a value leaner than the stoichiometric air-to-fuel ratio.

Moreover, the air-to-fuel ratio lean-correction means in the present invention may further includes lean-degree determination means that, when the amount of the blow-by of gas is large, changes a target air-to-fuel ratio of exhaust gas to a value leaner than that when the amount of the blow-by of gas is small.

This makes it possible to suppress the execution of the increase in the target air-to-fuel ratio to the minimum necessary regardless of the amount of the blow-by of fresh air. The deterioration of the exhaust emission due to the fact that the ambient air-to-fuel ratio of the catalyst is deviated from the vicinity of the stoichiometric air-to-fuel ratio can therefore be minimally suppressed.

Moreover, the lean-degree determination means in the present invention may change the target air-to-fuel ratio of exhaust gas to a leaner value so that an air-to-fuel ratio defined using an in-cylinder charged air amount obtained by subtracting the amount of the blow-by of gas from the amount of air passing through the intake valve coincides with the stoichiometric air-to-fuel ratio.

This makes it possible to control the air-to-fuel ratio defined using the in-cylinder charged air amount, that is to say, the air-to-fuel ratio at the time of combustion in the cylinder so as to be a value near the stoichiometric air-to-fuel ratio regardless of the amount of the blow-by of fresh air.

Moreover, the control apparatus for the internal combustion engine in the present invention may further comprises: an air-to-fuel ratio sensor that is installed in the exhaust passage on the upstream side of the catalyst to detect an air-to-fuel ratio of exhaust gas at the upstream of the catalyst; air-to-fuel ratio feedback controlling means that adjusts the fuel injection amount so that the air-to-fuel ratio of exhaust gas detected by the air-to-fuel ratio sensor becomes a predetermined target air-to-fuel ratio; air-to-fuel ratio feedback suspend means that, when the blow-by of gas occurs or when the condition in which the blow-by of gas is likely to occur is satisfied, suspends the adjustment of the fuel injection amount by the air-to-fuel ratio feedback controlling means; and in-cylinder air amount obtaining means that obtains an in-cylinder charged air amount out of the amount of air passing through the intake valve. Further, the fuel injection amount controlling means may set the fuel injection amount so that, when the blow-by of gas occurs or when the condition in which the blow-by of gas is likely to occur is satisfied, an air-to-fuel ratio defined using the in-cylinder charged air amount becomes the stoichiometric air-to-fuel ratio.

This makes it possible to set the fuel injection amount so that the air-to-fuel ratio defined using the amount of air passing through the intake valve coincides with a value leaner than the stoichiometric air-to-fuel ratio, by use of a manner that sets the fuel injection amount so that the air-to-fuel ratio defined using the in-cylinder charged air amount coincides with the stoichiometric air-to-fuel ratio using the air-to-fuel ratio feedback suspend means and the in-cylinder air amount obtaining means.

Moreover, the control apparatus for the internal combustion engine in the present invention may further comprises: a variable valve operating mechanism that is capable of changing opening and closing timings of the intake valve and a closing timing of the exhaust valve; and overlap period adjusting means that, when controlling the amount of the blow-by of gas by adjusting a valve overlap period during which an opening period of the intake valve and an opening period of the exhaust valve overlap with each other in a case where the blow-by of gas occurs or the condition in which the blow-by of gas is likely to occur is satisfied, executes the adjustment of the closing timing of the exhaust valve in priority to the adjustment of the opening and closing timings of the intake valve.

If the closing timing of the intake valve is changed by adjusting the opening and closing timings of the intake valve for the adjustment of the valve overlap period, the actual compression ratio of the internal combustion engine changes and ease of occurrence of knock changes. In this regard, the aforementioned manner, which executes the adjustment of at least the closing timing of the exhaust valve in priority to the adjustment of the opening and closing timings of the intake valve, makes it possible to prevent the fluctuation of the air-to-fuel ratio (the large dilution) of the exhaust gas due to the blow-by of gas (fresh air) while preventing knock resistance from being impaired as much as possible.

Moreover, the fuel injection valve in the present invention may further includes a first fuel injection valve that injects fuel into the intake passage and a second fuel injection valve that injects fuel into a cylinder. Further, the control apparatus for the internal combustion engine further comprises fuel injection valve selection means that selects the second fuel injection valve as a fuel injection valve that is used when fuel injection control is performed by the fuel injection timing setting means and the fuel injection amount controlling means.

This makes it possible to prevent wet fuel attaching to the periphery of an intake port from blowing to the exhaust passage as well as fresh air during the valve overlap period, and to therefore more surely prevent the blow-by of unburned fuel to the exhaust passage.

Moreover, the control apparatus for the internal combustion engine in the present invention may further comprises: gas blow-by determination means that determines whether or not the blow-by of gas occurs, or whether or not the condition in which the blow-by of gas is likely to occur is satisfied; and an air-to-fuel ratio sensor that is installed in the exhaust passage on the upstream side of the catalyst to detect an air-to-fuel ratio of exhaust gas at the upstream of the catalyst. Further, the gas blow-by determination means may determine that the blow-by of gas is occurring when the air-to-fuel ratio of the exhaust gas detected by the air-to-fuel ratio sensor is leaner than or equal to a sum of the stoichiometric air-to-fuel ratio and a predetermined value.

This makes it possible to accurately discriminate the monotonous fluctuation of the air-to-fuel ratio due to, for example, a variation of the air-to-fuel ratio between cylinders, from the blow-by of gas (fresh air).

### Brief Description of Drawings

Fig. 1 is a diagram for explaining a system configuration of an internal combustion engine according to a first embodiment of the present invention;
Fig. 2 is a diagram that represents one example of a control state concerning a valve timing of each of the intake valve and the exhaust valve shown in Fig. 1;
Fig. 3 is a diagram for explaining the scavenging effect of the blow-by of fresh air into an exhaust passage from an intake passage via a combustion chamber;
Fig. 4 is a flowchart of a routine that is executed in the first embodiment of the present invention;
Fig. 5 is a flowchart of a routine that is executed in a second embodiment of the present invention; and
Fig. 6 is a flowchart of a routine that is executed in a third embodiment of the present invention.

### Description of Embodiments

### First Embodiment

### [Explanation of system configuration]

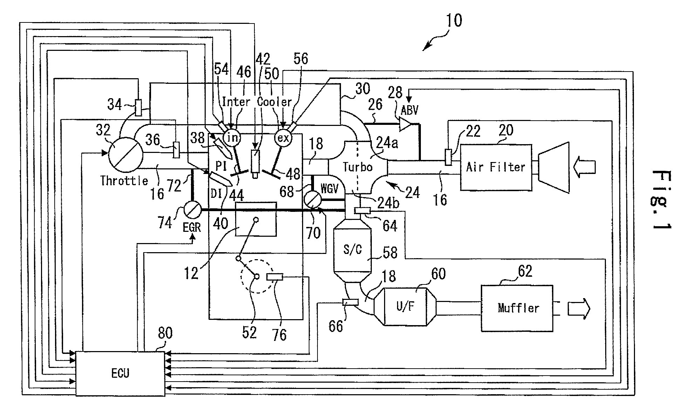

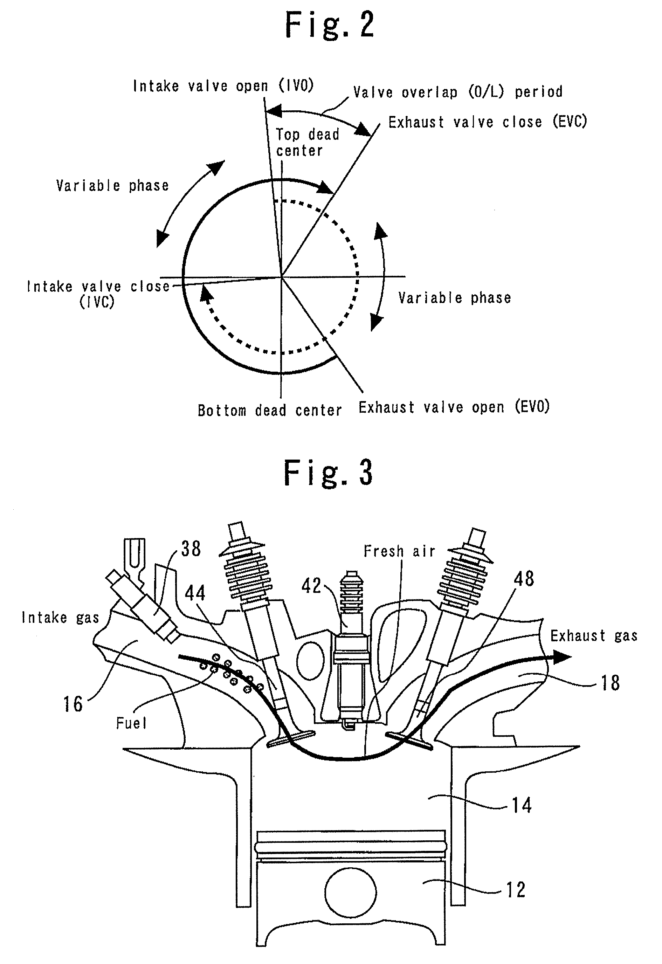

Fig. 1 is a diagram for explaining a system configuration of an internal combustion engine 10 according to a first embodiment of the present invention. The system shown in Fig. 1 includes an internal combustion engine 10. A piston 12 is provided in a cylinder of the internal combustion engine 10. A combustion chamber 14 (see Fig. 2) is formed on the top side of the piston 12 in the cylinder. There are an intake passage 16 and an exhaust passage 18 in communication with the combustion chamber 14.

An air filter 20 is installed in the vicinity of an inlet of the intake passage 16. In the intake passage 16 on the downstream side of the air filter 20, an air flow meter 22 that outputs a signal corresponding to the flow rate of air sucked into the intake passage 16 is installed. A compressor 24a of a turbo-supercharger 24 is disposed in the intake passage 16 on the downstream side of the air flow meter 22. Further, to bypass the compressor 24a, an air bypass passage 26 is connected to the intake passage 16. At some point in the air bypass passage 26, an air bypass valve (ABV) 28 for controlling the flow rate of the air that flows through the air bypass passage 26 is disposed.

An intercooler 30 for cooling air that is compressed by the compressor 24a is disposed in the intake passage 16 on the downstream side of the compressor 24a. An electronically-controlled throttle valve 32 is installed in the intake passage 16 on the downstream side of the intercooler 30. In addition, in the intake passage 16 on the upstream side of the throttle valve 32 and on the downstream side of the intercooler 30, a throttle upstream side pressure sensor 34 for detecting intake pressure at that position is installed; and in the intake passage 16 on the downstream side of the throttle valve 32 (the collector section of an intake manifold), a throttle downstream side pressure sensor 36 for detecting intake pressure at that position is installed.

A port injection valve 38 for injecting fuel into an intake port is installed in the intake passage 16 (each intake port) after branching off toward each cylinder. Further, there are installed in each cylinder of the internal combustion engine 10, an in-cylinder injection valve 40 for directly injecting fuel into the combustion chamber 14 (into the cylinder) and a spark plug 42 for igniting air-fuel mixture gas. In the internal combustion engine 10, in order to stabilize combustion and improve fuel efficiency, at least one of the port injection valve 38 and the in-cylinder injection valve 40 is selected in accordance with operating conditions.

Moreover, the internal combustion engine 10 includes an intake variable valve operating mechanism 46 which makes valve opening characteristics of an intake valve 44 variable, and an exhaust variable valve operating mechanism 50 which makes valve opening characteristics of an exhaust valve 48 variable. More specifically, it is assumed herein that each of these variable valve operating mechanisms 46 and 50 includes a variable phase mechanism (VVT (Variable Valve Timing) mechanism) which can continuously changing the opening and closing timings of the intake valve 44 or exhaust valve 48 while fixing the operating angle thereof, by changing the rotation phase of a camshaft (not illustrated in the drawings) with respect to the rotation phase of a crankshaft 52. Moreover, an intake cam angle sensor 54 and an exhaust cam angle sensor 56, which detect the rotation angle of each camshaft, that is, an intake cam angle and an exhaust cam angle, are disposed respectively in the vicinity of the intake camshaft and the exhaust camshaft.

A turbine 24b of the turbo-supercharger 24 is disposed in the exhaust passage 18. As exhaust purifying catalysts for purifying exhaust gas (herein, three-way catalysts), an upstream catalyst (SC: start catalyst) 58 and a downstream catalyst (UFC: under floor catalyst) 60 are installed in the exhaust passage 18 on the downstream side of the turbine 24 in series in the order from the upstream side. A muffler 62 is installed in the exhaust passage 18 on the downstream side of the downstream catalyst 60.

Moreover, at the exhaust passage 18 on the upstream side of the upstream catalyst 58, an A/F sensor 64 is installed to produce an output substantially linear relative to the air-to-fuel ratio of exhaust gas flowing into the upstream catalyst 58 (exhaust gas discharged from each cylinder). At a section between the upstream catalyst 58 and the downstream catalyst 60 in the exhaust passage 18, an O₂ sensor 66 is installed to produce a rich output when the exhaust gas flowing out through the upstream catalyst 58 is richer than the stoichiometric air-to-fuel ratio and to produce a lean output when the exhaust gas is leaner than the stoichiometric air-to-fuel ratio.

Moreover, an exhaust bypass passage 68 that bypasses the turbine 24b and connects the inlet side of the turbine 24b with the outlet side thereof is connected to the exhaust passage 18. A waste gate valve (WGV) 70 that opens and closes the exhaust bypass passage 68 is installed at some point of the exhaust bypass passage 68. Further, the internal combustion engine 10 includes an exhaust gas recirculation passage (EGR passage) 72 that connects the intake passage 16 with the exhaust passage 18. At some point of the EGR passage 72, an EGR valve 74 is installed to adjust the amount of exhaust gas that flows back into the intake passage 16 from the exhaust passage 18 (EGR gas). Furthermore, a crank angle sensor 76 for detecting a crank angle and an engine speed is installed in the vicinity of the crankshaft 52.

Furthermore, the system shown in Fig. 1 includes an ECU (Electronic Control Unit) 80. There are connected to an input section of the ECU 80, various types of sensors for detecting the operational state of the internal combustion engine 10, such as the air flow meter 22, the throttle upstream pressure sensor 36, the cam angle sensors 54 and 56, the A/F sensor 64, the O₂ sensor 66 and the crank angle sensor 76 that are described above. In addition, there are connected to an output section of the ECU 80, various types of actuators for controlling the operation of the internal combustion engine 10, such as the ABV 28, the throttle valve 32, the port injection valve 38, the in-cylinder injection valve 40, the spark plug 42, the variable valve operating mechanisms 46 and 50, the WGV70 and the EGR valve 74 that are described above. The ECU 80 controls the operational state of the internal combustion engine 10 by actuating the various types of actuators on the basis of the output of each sensor and predetermined programs.

In the system of the internal combustion engine 10 that includes the above described configuration, a base fuel injection amount is basically set so that an air-to-fuel ratio defined using the amount of air passing through the intake valve 44 coincides with the theoretical air-to-fuel ratio (stoichiometric air-to-fuel ratio) during operation of the internal combustion engine 10, expect for predetermined exceptional operating conditions (such as the time of cold start). Specifically, in order to enable such base fuel injection amount to be obtained, the ECU 80 stores a map (not illustrated in the drawings) that defines the base fuel injection amount in accordance with the operating state (the intake air amount (the load factor) based on the output of the air flow meter 22, and the engine speed), and calculates the base fuel injection amount in accordance with the present operating state with reference to such map.

Further, in the aforementioned system of the internal combustion engine 10, after the A/F sensor 64 and the O₂ sensor 66 are activated following the start-up of the internal combustion engine 10, a main feedback control is executed on the basis of the output of the A/F sensor 64 on the upstream side. In the main feedback control, correction of fuel injection amount with respect to the base fuel injection amount is performed so that the air-to-fuel ratio of the exhaust gas that flows into the upstream catalyst 58 coincides with a target air-to-fuel ratio (basically, the stoichiometric air-to-fuel ratio). In a sub feedback control that is executed on the basis of the output of the O₂ sensor 66 on the downstream side, the contents of the main feedback control are corrected so that the air-to-fuel ratio of the exhaust gas that flows out to the downstream of the downstream catalyst 60 coincides with the stoichiometric air-to-fuel ratio.

### [Scavenging effect of blow-by of fresh air into exhaust passage from intake passage via combustion chamber]

Fig. 2 is a diagram that represents one example of a control state concerning a valve timing of each of the intake valve 44 and the exhaust valve 46 shown in Fig. 1.

In the control state shown in Fig. 2, a valve overlap period during which the valve opening period of the intake valve 44 and the valve opening period of the exhaust valve 48 overlap with each other (hereinafter, simply abbreviated as "O/L period") is provided in the vicinity of the intake/exhaust top dead center. As described above, the opening and closing timings (the phase) of the intake valve 44 can be changed using the intake variable valve operating mechanism 46 within a predetermined variable range, and the opening and closing timings (the phase) of the exhaust valve 48 can be changed using the exhaust variable valve operating mechanism 50 within a predetermined variable range. The aforementioned O/L period can be increased and decreased by changing, using these variable valve operating mechanisms 46 and 50, at least one of the advance angle value of the opening and closing timings of the intake valve 44 and the retard angle value of the opening and closing timings of the exhaust valve 48.

Fig. 3 is a diagram for explaining the scavenging effect of the blow-by of fresh air into the exhaust passage 18 from the intake passage 16 via the combustion chamber 14. In Fig. 3, the illustration of the in-cylinder injection valve 40 is omitted.

When intake pressure (on the upstream of the intake valve 44) is higher than exhaust pressure (on the downstream of the exhaust valve) with the supercharging by the turbo-supercharger 24 in a state in which the O/L period is provided as shown in Fig. 2, a phenomenon occurs in which the fresh air (intake gas) blows through the combustion chamber 14 to the exhaust passage 18 from the intake passage 16 as shown in Fig. 3. Although in-cylinder residual gas, the amount of which corresponds to at least the clearance volume of the combustion chamber 14, normally exists, an occurrence of such blow-by of fresh air allows the residual gas to be extruded and scavenged using the fresh air from the intake passage 16 and to be thereby replaced with the fresh air (scavenging effect). This can produces effects such as an increase in the torque of the internal combustion engine 10.

It is noted that the aforementioned scavenging effect is produced when an O/L amount is intentionally set in order to achieve this effect in a predetermined low-speed and high-load region in which the effect can be expected to be produced, or is produced when a condition in which the effect can be produced is satisfied in a situation where an O/L amount is set for another purpose.

### [Control of first embodiment]

It is ideal that in order to increase the torque of the internal combustion engine 10 using the above described scavenging effect, the amount of the fresh air introduced for the scavenging is just the amount for sweeping the in-cylinder residual gas the amount of which corresponds to the clearance volume of the combustion chamber 14. However, it is difficult to continue to control the O/L amount so that such an ideal scavenging can be always achieved during operation of the internal combustion engine 10.

When an O/L amount is provided to utilize the scavenging effect, oxygen that is included in the fresh air that has blown through the combustion chamber 14 by the action of excess scavenging is trapped (stored) by the catalysts 58 and 60 (mainly, the upstream catalyst 58). In addition, the amount of in-cylinder charged air that is actually charged in the cylinder when the blow-by of fresh air is occurring corresponds to the amount obtained by subtracting the blow-by fresh air amount from the amount of air that passes through the intake valve 44 to flow into the cylinder (intake valve passing-through air amount). Nevertheless, if the fuel injection amount is controlled so that the air-to-fuel ratio that is defined using the intake valve passing-through air amount coincides with the stoichiometric air-to-fuel ratio, the air-to-fuel ratio in the cylinder at the time of combustion becomes a value richer than the stoichiometric air-to-fuel ratio. As a result of this, if a rich gas that is subsequently discharged from the cylinder (a gas that includes unburned fuel that has not been used for combustion and is richer than the stoichiometric air-to-fuel ratio) flows into the upstream catalyst 58, the unburned fuel in this rich gas and the oxygen that has been trapped by the upstream catalyst 58 brings about an oxidation reaction. Further, when fuel injection is performed during the O/L period or prior to the O/L period, unburned fuel flows into the upstream catalyst 58 as well as the blow-by fresh air. Also in this case, the unburned fuel that has flown into the upstream catalyst 58 brings about an oxygen reaction with oxygen. As a result, the temperature of the upstream catalyst 58 rapidly rises. Therefore, there is a concern that the deterioration of the upstream catalyst 58 may be facilitated due to such a temperature rise if the upstream catalyst 58 is in a high-temperature state. Moreover, the problem as described above arises more prominently in a case such that when utilizing the scavenging effect, the air-to-fuel ratio is controlled to a predetermined air-to-fuel ratio for best torque that is richer than the stoichiometric air-to-fuel ratio in order to increase the toque.

Accordingly, in the present embodiment, the following fuel injection control is executed if an occurrence of the aforementioned blow-by of gas has been detected in a condition in which the temperature of the upstream catalyst 58 is higher than a predetermined value (a situation in which the deterioration of the upstream catalyst 58 is concerned). Specifically, when these conditions (in which the blow-by of fresh air occurs and the temperature of the upstream catalyst 58 is high) are satisfied, the fuel injection timing is set (changed) so that the fuel injection is executed after the exhaust valve 48 is closed (that is, after the O/L period is terminated). Further, if these conditions are satisfied, the base fuel injection amount is corrected using the aforementioned (main) air-to-fuel ratio feedback control so that the air-to-fuel ratio of the exhaust gas detected by the A/F sensor 64 (that is, the air-to-fuel ratio of the exhaust gas flowing into the upstream catalyst 58) becomes a value leaner than the stoichiometric air-to-fuel ratio.

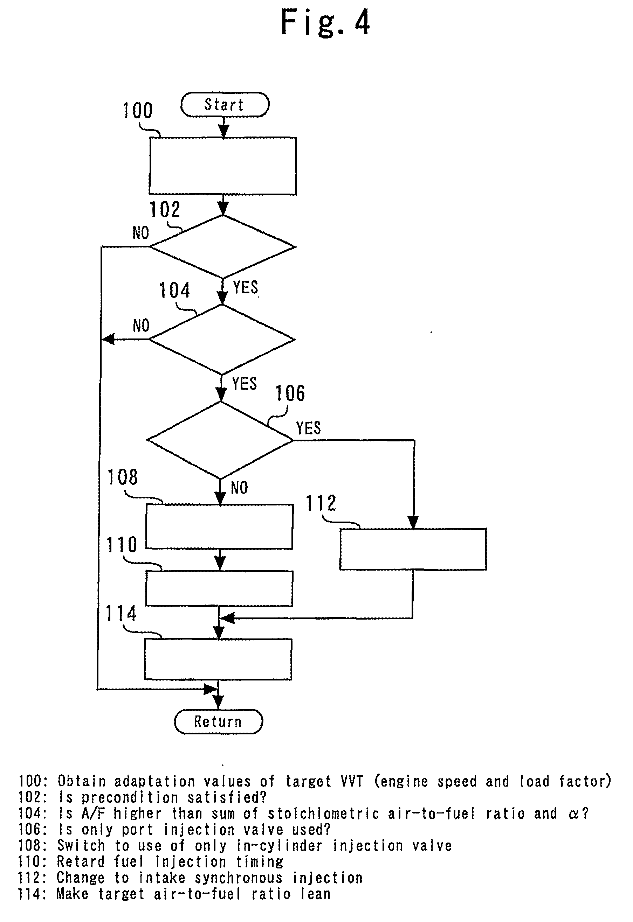

Fig. 4 is a flowchart that represents a control routine executed by the ECU 80 to implement the control according to the first embodiment of the present invention. It is assumed that the present routine is repeatedly executed at a predetermined control cycle.

In the routine shown in Fig. 4, first, adaptation values of target valve timings (VVT) of the intake valve 44 and the exhaust valve 48 are obtained (step 100). The ECU 80 stores a map (not illustrated in the Drawings) that previously defines the adaptation values of the target VVT with a relation to the engine speed and the load factor (air charge rate). In this map, as for a predetermined low-speed and high-load region in which the scavenging effect can be expected, the O/L period for utilizing the scavenging effect is set with values according to the operating state. In present step 100, the adaptation values of the target VVT in accordance with the present operating state (engine speed and load factor) are obtained with reference to such map.

Next, it is determined whether or not a precondition concerning execution of the control according to the present embodiment is satisfied (step 102). Specifically, the precondition in present step 102 is a condition for judging whether or not an operating condition in which the blow-by of gas (scavenging effect) actually occurs is satisfied in a temperature situation in which the deterioration of the upstream catalyst 58 is concerned. The present precondition is related to: whether or not the temperature of the upstream catalyst 58 is higher than a predetermined value; whether or not the intake pressure (throttle downstream pressure) is higher than the exhaust pressure (nearly, atmospheric air pressure); and whether or not the advance angle value of the opening and closing timings of the intake valve 44 is larger than a predetermined adaptation value A (or the retard angle value of the opening and closing timings of the exhaust valve 48 is larger than a predetermined adaptation value B). In addition, when the engine speed varies, the opening time periods of the intake and exhaust valves 44 and 48 during the O/L period change even if the opening areas thereof are equal. Therefore, the engine speed is also considered in the determination of the precondition in present step 102. Incidentally, for example, the temperature of the upstream catalyst 58 can be estimated on the basis of the operation record of the internal combustion engine 10, or may be obtained using a temperature sensor additionally included.

If it is determined that the aforementioned precondition in step 102 is satisfied, it is determined whether or not the air-to-fuel ratio (A/F) of the exhaust gas detected by the A/F sensor 64 is higher than (that is, leaner than) a value obtained by adding a predetermined value α (for example, 0.5) to the theoretical air-to-fuel ratio (stoichiometric air-to-fuel ratio) (step 104). If the blow-by of fresh air occurs in a situation in which the air-to-fuel ratio of the exhaust gas is being controlled to the stoichiometric air-to-fuel ratio by the above described air-to-fuel ratio feedback control, the output of the A/F sensor 64 changes to a value that is leaner than the stoichiometric air-to-fuel ratio. Accordingly, it is determined in present step 104 whether or not the blow-by of fresh air is actually occurring by determining whether or not the air-to-fuel ratio of the exhaust gas is larger than the value by adding the predetermined value α to the stoichiometric air-to-fuel ratio. The predetermined value α is a value that is used for preventing erroneous decision due to, for example, a variation in the air-to-fuel ratio between cylinders.

If the determination of step 104 becomes affirmative following the affirmative determination of step 102, that is to say, if an occurrence of the blow-by of fresh air is detected, it is determined whether or not there is a situation in which only the port injection valve 38 is being used (step 106). As a result of this, if the port injection valve 38 and the in-cylinder injection valve 40 are concurrently being used, a fuel injection valve that is used for the fuel injection control is switched so as to only use the in-cylinder injection valve 40 (step 108). On that basis, the fuel injection timing is retarded so that the fuel injection is executed after the exhaust valve 48 is closed (that is to say, after the O/F period elapses) (step 110). According to the in-cylinder injection valve 40, the fuel injection can be executed at an arbitrary timing in the intake stroke and the compression stroke. According to the processing of present step 110, the retard of the fuel injection timing is executed so that fuel is not blown to the exhaust passage 18 as well as fresh air during the O/L period. Specifically, the fuel injection is executed during the intake stroke after closing of the exhaust valve 48, the subsequent compression stroke, or a period that extends over the both.

If, on the other hand, it is determined in step 106 that there is in a situation in which only the port injection valve 38 is being used, the manner of fuel injection using the port injection valve 38 is changed to intake synchronous injection that is executed after the exhaust valve 48 is closed (that is to say, after the O/L period elapses) (step 112). As for the fuel injection using the port injection 38, intake asynchronous injection, in other words, fuel injection that is executed during the course of the exhaust stroke is normally executed. In present step 112, the switching to the intake synchronous injection from such intake asynchronous injection is performed so that fuel is supplied into the combustion chamber 14 as well as intake air during the course of the intake stroke after the exhaust valve 48 is closed.

After the processing of step 110 or 112 is executed, the target air-to-fuel ratio of the above described (main) air-to-fuel ratio feedback control is made lean so that the air-to-fuel ratio of the exhaust gas that is detected by the A/F sensor 64 becomes a value leaner than the stoichiometric air-to-fuel ratio (step 114). As described above, the base fuel injection amount itself is set so that the air-to-fuel ratio defined using the intake valve passing-through air amount coincides with the stoichiometric air-to-fuel ratio. In present step 114, a correction (lean correction) to subtract a predetermined fuel amount from the base fuel injection amount is executed so that the air-to-fuel ratio detected by the A/F sensor 64 becomes a value leaner than the stoichiometric air-to-fuel ratio.

In present step 114, the degree of lean of the target air-to-fuel ratio (that is to say, the decrease amount of fuel with respect to the base fuel injection amount) is fixed in accordance with the amount of blow-by of fresh air. More specifically, the fuel injection amount is adjusted (decreased) so that the air-to-fuel ratio that is defined using the in-cylinder charged air amount that is obtained by subtracting the amount of blow-by of fresh air from the intake valve passing-through air amount coincides with the stoichiometric air-to-fuel ratio. As the amount of blow-by of fresh air increases, the in-cylinder charged air amount, which is the amount of air charged in the cylinder, out of the intake valve passing-through air amount decreases. Accordingly, in present step 114, as the amount of blow-by fresh air increases, the degree of lean of the target air-to-fuel ratio (the decrease amount of the fuel injection amount) is adjusted so as to be increased. It is noted that the amount of blow-by of fresh air to the exhaust passage 18 itself can be calculated on the basis of the intake pressure (throttle downstream pressure), the exhaust pressure, the O/L amount and the engine speed (the opening time period in the O/L period). In this case, the aforementioned intake pressure can be obtained using the throttle downstream pressure sensor 36, and the exhaust pressure can be obtained on the basis of a turbine rotational speed that is separately estimated, the opening degree of the WGV 70, the intake air amount detected by the air flow meter 22, and the like.

Incidentally, when the blow-by of fresh air has stopped being detected due to the fact that the determination of step 102 or 104 becomes negative after the determination of step 104 becomes affirmative, the fuel injection control is returned to the control at the normal time.

According to the routine shown in Fig. 4 described so far, if an occurrence of the blow-by of fresh air (scavenging effect) is detected in a situation in which the deterioration of the upstream catalyst 58 is concerned, the fuel injection timing is changed by the processing of step 110 or 112. This can prevent fuel from blowing to the exhaust passage 18 as well as fresh air during the O/L period even when either of the port injection valve 38 and the in-cylinder injection valve 40 is used. In other words, all amount of the injected fuel is surely left in the cylinder. Further, according to the increase in the target air-to-fuel ratio with the processing of step 114, although the air-to-fuel ratio defined using the intake valve passing-through air amount becomes leaner than the stoichiometric air-to-fuel ratio, the fuel injection amount is corrected so that the air-to-fuel ratio that is defined using the in-cylinder charged air amount that is obtained by subtracting the amount of blow-by of fresh air from the intake valve passing-through air amount coincides with the stoichiometric air-to-fuel ratio. Consequently, the exhaust gas (burned gas) discharged from the cylinder can be prevented from including unburned fuel.

Accordingly, the control of the present embodiment can achieve the prevention of the blow-by of unburned fuel to the exhaust passage 18 and the prevention of the discharge of unburned fuel from the cylinder. This makes it possible to prevent oxygen trapped (stored) in the upstream catalyst 58 from bringing about an oxygen reaction with unburned fuel inside the upstream catalyst 58, and to thereby prevent the temperature of the upstream catalyst 58 from rapidly rising at the time of occurrence of the blow-by of fresh air. In addition, according to the control of the present embodiment, the air-to-fuel ratio defined using the in-cylinder charged air amount can be maintained at the stoichiometric air-to-fuel ratio even when such increase in the target air-to-fuel ratio is being performed. Therefore, the control can prevent the deterioration of the upstream catalyst 58 from being facilitated while ensuring an increase in the torque of the internal combustion engine 10 by use of the scavenging effect.

Moreover, according to the aforementioned routine, the degree of lean of the target air-to-fuel ratio is fixed in accordance with the amount of blow-by of fresh air. This can suppress the execution of the increase in the target air-to-fuel ratio to the minimum necessary regardless of the amount of the blow-by of fresh air, and the deterioration of the exhaust emission due to the fact that the ambient air-to-fuel ratio of the upstream catalyst 58 is deviated from the vicinity of the stoichiometric air-to-fuel ratio can therefore be minimally suppressed. Further, according to the increase in the target air-to-fuel ratio in step 114, the air-to-fuel ratio defined using the in-cylinder charged air amount, that is to say, the air-to-fuel ratio at the time of combustion in the cylinder can be controlled so as to be a value near the stoichiometric air-to-fuel ratio regardless of the amount of the blow-by of fresh air.

Moreover, according to the aforementioned routine, the fuel injection valve that is used for the fuel injection control is switched so as to use only the in-cylinder injection valve 40 if the port injection valve 38 and the in-cylinder injection valve 40 are concurrently being used when an occurrence of the blow-by of fresh air (scavenging effect) is detected. At the time of use of the port injection valve 38, a part of the injected fuel attaches to the periphery of the intake port as a wet fuel. In contrast, the switching is performed so that all amount of the fuel is injected using the in-cylinder injection valve 40, and can thereby prevent the wet fuel from blowing to the exhaust passage 18 as well as fresh air during the O/L period. Consequently, the blow-by of unburned fuel to the exhaust passage 18 can be more surely prevented.

Furthermore, the processing of steps 102 and 104 in the aforementioned routine multiply determines whether or not the blow-by of fresh air (scavenging effect) occurs. The above described increase in the target air-to-fuel ratio can suppress the deterioration of the upstream catalyst 58 while ensuring an increase in the torque of the internal combustion engine 10. However, the ambient air-to-fuel ratio of the upstream catalyst 58 is changed from a value near the stoichiometric air-to-fuel ratio to a value leaner than that. Thus, the execution of the increase in the target air-to-fuel ratio can be suppressed to the minimum necessary by more accurately detecting an occurrence of the blow-by of fresh air (scavenging effect) with the processing of steps 102 and 104. In addition, such determination makes it possible to accurately discriminate the monotonous fluctuation of the air-to-fuel ratio due to, for example, a variation of the air-to-fuel ratio between cylinders, from the blow-by of fresh air.

In the first embodiment, which has been described above, the ECU 80 executes the aforementioned processing of step 110 or 112, whereby the "injection timing setting means" according to the present invention is realized; the ECU 80 calculates the intake valve passing-through air amount using a known relational expression and the air flow meter 22, whereby the "intake valve passing-through air amount obtaining means" according to the present invention is realized; and the ECU 80 executes the aforementioned processing of step 114, whereby the "fuel injection amount controlling means" according to the present invention is realized. In addition, the aforementioned processing of step 104 corresponds to the "determination of whether or not blow-by of gas to the exhaust passage from an intake passage through a combustion chamber occurs" according to the present invention; and the aforementioned processing of step 102 corresponds to the "determination of whether or not a condition in which the blow-by of gas is likely to occur is satisfied" according to the present invention.

Moreover, in the first embodiment, the ECU 80 executes the aforementioned processing of step 112, whereby the "catalyst temperature determination means" according to the present invention is realized.

Moreover, in the first embodiment, the A/F sensor 64 corresponds to the "air-to-fuel ratio sensor" according to the present invention; and the ECU 80 executes the aforementioned processing of step 114, whereby the "air-to-fuel ratio lean-correction means" according to the present invention is realized.

Moreover, in the first embodiment, the ECU 80 executes the aforementioned processing of step 114, whereby the "lean-degree determination means" according to the present invention is realized.

Moreover, in the first embodiment, the port injection valve 38 corresponds to the "first fuel injection valve" according to the present invention; and the in-cylinder injection valve 40 corresponds to the "second fuel injection valve" according to the present invention. In addition, the ECU 80 executes the aforementioned processing of step 108 when the aforementioned determination of step 106 is negative, whereby the "fuel injection valve selection means" according to the present invention is realized.

Moreover, in the first embodiment, the ECU 80 executes the aforementioned processing of steps 102 and 104, whereby the "gas blow-by determination means" according to the present invention is realized.

### Second Embodiment

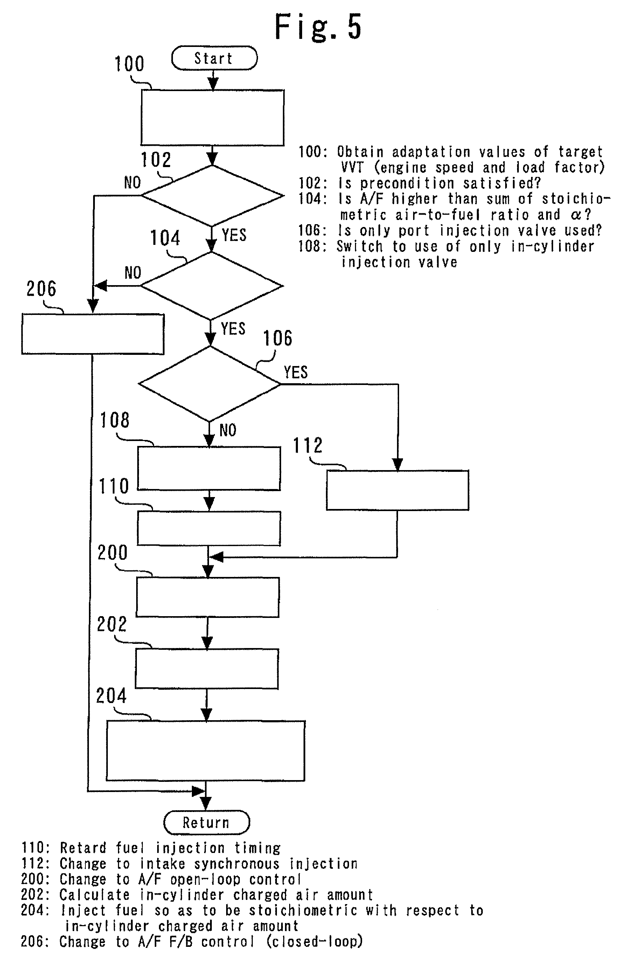

Next, a second embodiment of the present invention will be described with reference to Fig. 5.

The system of the present embodiment can be implemented by using the hardware configuration shown in Fig. 1 and causing the ECU 80 to execute the routine shown in Fig. 5 described below, instead of the routine shown in Fig. 4.

In the above described first embodiment, when an occurrence of the blow-by of fresh air (scavenging effect) is detected in a situation in which the deterioration of the upstream catalyst 58 is concerned, an increase in the target air-to-fuel ratio is executed using the air-to-fuel ratio feedback control, as well as the retard of the fuel injection timing. In contrast, when an occurrence of the blow-by of fresh air (scavenging effect) is detected in a situation in which the deterioration of the upstream catalyst 58 is concerned, the system of the present embodiment is the same as the system of the above described first embodiment in executing the retard of the fuel injection timing and is different from the first embodiment in the following points. More specifically, in the present embodiment, the air-to-fuel ratio feedback control is suspended (that is to say, the control is changed to air-to-fuel ratio open-loop control that is not associated with feedback), and the fuel injection amount is set so that the air-to-fuel ratio defined using the in-cylinder charged air amount coincides with the stoichiometric air-to-fuel ratio.

Fig. 5 is a flowchart that represents a control routine executed by the ECU 80 to implement the control according to the second embodiment of the present invention. In Fig. 5, the same steps as the steps shown in Fig. 4 in the first embodiment will be assigned with the same reference numerals, and the description thereof will be omitted or simplified.

In the routine shown in Fig. 5, after the processing of step 110 or 112 is executed, next, the air-to-fuel ratio feedback control (the above described main and sub feedback controls correspond to this) is suspended, and is changed to the air-to-fuel ratio open-loop control that is not associated with feedback (step 200).

Next, the in-cylinder charged air amount is calculated (step 202). As already described in the first embodiment, the in-cylinder charged air amount in a situation in which the blow-by of fresh air is detected can be calculated (estimated) by subtracting the amount of the blow-by of fresh air to the exhaust passage 18, from the intake valve passing-through air amount based on the output of the air flow meter 22.

Next, the fuel injection amount is set so that the air-to-fuel ratio defined using the in-cylinder charged air amount calculated in step 202 coincides with the stoichiometric air-to-fuel ratio (step 204). In present step 204, the use of the aforementioned map that defines the base fuel injection amount for obtaining the stoichiometric air-to-fuel ratio is suspended, and the fuel injection amount is fixed so that the stoichiometric air-to-fuel ratio is obtained on the basis of the in-cylinder charged air amount. If the determination of step 102 or 104 is negative, the aforementioned air-to-fuel ratio feedback control (closed-loop) is executed as normal (step 206).

According to the routine shown in Fig. 5 described so far, if an occurrence of the blow-by of fresh air (scavenging effect) is detected in a situation in which the deterioration of the upstream catalyst 58 is concerned, the retard of the fuel injection timing using the processing of step 110 or 112 and the control of the fuel injection amount in steps 200 to 204 are executed. Such control can also control the air-to-fuel ratio of the exhaust gas flowing into the upstream catalyst 58 to a value leaner than the stoichiometric air-to-fuel ratio while controlling the air-to-fuel ratio at the time of combustion in the cylinder to the stoichiometric air-to-fuel ratio, as in the above described control according to the first embodiment. In other words, it can be said that when taking the intake valve passing-through air amount as a reference, the manner of the present embodiment performs the increase in the target air-to-fuel ratio at the time of detection of the blow-by of fresh air.

The control of the present embodiment as described so far can also achieve the prevention of the blow-by of unburned fuel to the exhaust passage 18 and the prevention of discharge of the unburned fuel from the cylinder. This makes it possible to prevent oxygen trapped (stored) in the upstream catalyst 58 from bringing about an oxygen reaction with unburned fuel inside the upstream catalyst 58, and to thereby prevent the temperature of the upstream catalyst 58 from rapidly rising. In addition, according to the control of the present embodiment, the air-to-fuel ratio defined using the in-cylinder charged air amount can be maintained at the stoichiometric air-to-fuel ratio even when such increase in the target air-to-fuel ratio is being performed, as in the control according to the first embodiment. Therefore, the control can prevent the deterioration of the upstream catalyst 58 from being facilitated while ensuring an increase in the torque of the internal combustion engine 10 by use of the scavenging effect.

Meanwhile, in the second embodiment, which has been described above, the air-to-fuel ratio feedback control is suspended and the fuel injection amount is set so that the air-to-fuel ratio defined using the in-cylinder charged air amount coincides with the stoichiometric air-to-fuel ratio, in order to increase the target air-to-fuel ratio at the time of detection of the blow-by of fresh air. However, the fuel injection amount control in the present invention is not limited to the above described manner. More specifically, at the time of detection of the blow-by of fresh air, for example, the air-to-fuel ratio feedback control may be suspended and the fuel injection amount may be set so that the air-to-fuel ratio defined using the intake valve passing-through air amount becomes a value leaner than the stoichiometric air-to-fuel ratio.

In the second embodiment, which has been described above, the ECU 80 executes the main feedback control described in the first embodiment, whereby the "air-to-fuel ratio feedback controlling means" according to the present invention is realized; the ECU 80 executes the aforementioned processing of step 200, whereby the "air-to-fuel ratio feedback suspend means" according to the present invention is realized; and the ECU 80 executes the aforementioned processing of step 202, whereby the "in-cylinder air amount obtaining means" according to the present invention is realized.

### Third Embodiment

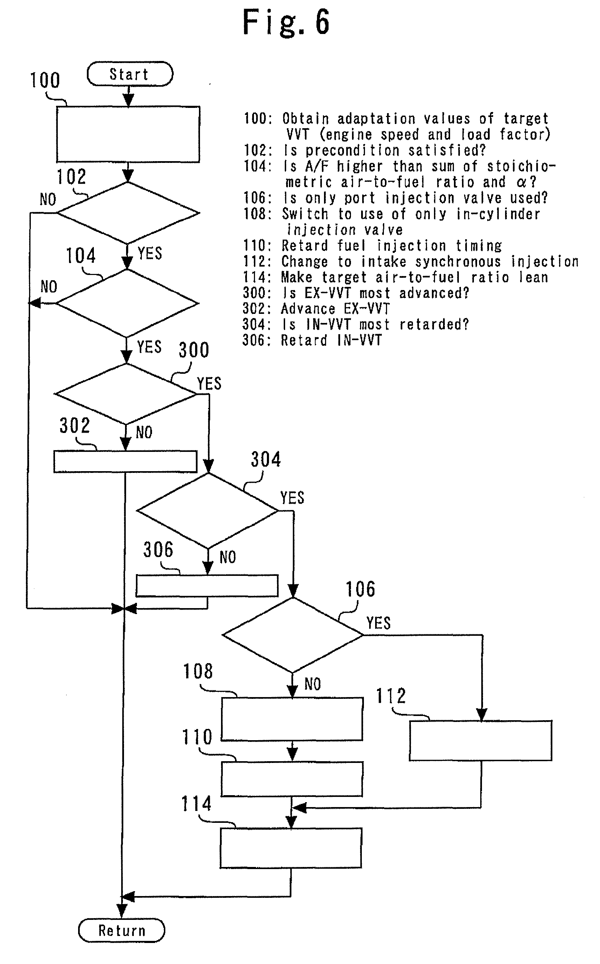

Next, a third embodiment of the present invention will be described with reference to Fig. 6.

The system of the present embodiment can be implemented by using the hardware configuration shown in Fig. 1 and causing the ECU 80 to execute the routine shown in Fig. 6 described below, instead of the routine shown in Fig. 4.

Meanwhile, in the first and second embodiments, which have been described above, the retard of the fuel injection timing and the increase in the target air-to-fuel ratio are executed when the blow-by of fresh air (scavenging effect) is detected. In contrast, in the present embodiment, the following control is executed prior to the retard of the fuel injection timing and the increase in the target air-to-fuel ratio when the blow-by of fresh air is detected.

More specifically, in the present embodiment, when the blow-by of fresh air is detected, by adjusting the O/L amount on the basis of the output of the A/F sensor 64, the amount of the blow-by of fresh air (the scavenging amount) is adjusted so as not to be excessively scavenged. On this occasion, the present embodiment is characterized by executing the adjustment of the opening and closing timings of the exhaust valve 48 in priority to (ahead of) the adjustment of the opening and closing timings of the intake valve 44. Further, if the adjustment margin of the opening and closing timings of the exhaust valve 48 has been run out, the adjustment of the opening and closing timings of the intake valve 44 is executed. On that basis, if the adjustment of the amount of the blow-by of fresh air is not sufficient even though the adjustment margin of the opening and closing timings of the intake valve 44 has been subsequently run out, the retard of the fuel injection timing and the increase in the target air-to-fuel ratio that are explained in the first and second embodiments are executed.

Fig. 6 is a flowchart that represents a control routine executed by the ECU 80 to implement the control according to the third embodiment of the present invention. In Fig. 6, the same steps as the steps shown in Fig. 4 in the first embodiment will be assigned with the same reference numerals, and the description thereof will be omitted or simplified. In addition, although description is herein made taking as an example a control routine that is combined with the control of the first embodiment (step 114), instead of that, a control routine that is combined with the control of the second embodiment (steps 200 to 204) may be used.

In the routine shown in Fig. 6, when the determination of step 104 is affirmative, that is to say, when an occurrence of the blow-by of fresh air is detected, it is determined whether or not the present advance angle value of the opening and closing timings of the exhaust valve 48 (EX-VVT) is the most advanced angle value by use of the exhaust cam angle sensor 56 (step 300).

If, as a result, it is determined in step 300 that the advance angle value of the opening and closing timings of the exhaust valve 48 has not yet reached the most advanced angle value, the advance of the opening and closing timings of the exhaust valve 48 is executed (step 302). As the amount of the blow-by of fresh air increases, the air-to-fuel ratio of the exhaust gas that flows into the upstream catalyst 58 is largely increased. If the atmosphere of the upstream catalyst 58 is disturbed, due to such increase in the air-to-fuel ratio, so as to be deviated from the atmosphere of the stoichiometric air-to-fuel ratio, the purifying performance of the upstream catalyst 58 is impaired. Accordingly, in present step 302, the advance of the opening and closing timings of the exhaust valve 48 is executed on the basis of the output of the A/F sensor 64 so that the amount of the blow-by of fresh air is obtained in which the air-to-fuel ratio of the exhaust gas flowing into the upstream catalyst 58 is equal to or lower than a value obtained by adding the aforementioned predetermined value α to the stoichiometric air-to-fuel ratio.

If, on the other hand, it is determined in step 300 that the advance angle value of the opening and closing timings of the exhaust valve 48 has reached the most advanced angle value, next, it is determined whether or not the present retard angle value of the opening and closing timings of the intake valve 44 (IN-VVT) is the most retarded angle value by use of the intake cam angle sensor 54 (step 304). If, as a result, it is determined that the retard angle value of the opening and closing timings of the intake valve 44 has not yet reached the most retarded angle value, the retard of the opening and closing timings of the intake valve 44 is executed (step 306). Specifically, in present step 306, the retard of the opening and closing timings of the intake valve 44 is executed on the basis of the output of the A/F sensor 64 so that the amount of the blow-by of fresh air is obtained in which the air-to-fuel ratio of the exhaust gas flowing into the upstream catalyst 58 is equal to or lower than a value obtained by adding the aforementioned predetermined value α to the stoichiometric air-to-fuel ratio.

If, on the other hand, it is determined in step 306 that the retard angle value of the opening and closing timings of the intake valve 44 has reached the most retarded angle value, that is to say, if the large dilution of the exhaust gas flowing into the upstream catalyst 58 is not fully eliminated even though the advance of the opening and closing timings of the exhaust valve 48 and the retard of the opening and closing timings of the intake valve 44 have been executed, next, the processing of step 106 and the subsequent steps in the routine shown in Fig. 4 are executed.

According to the routine shown in Fig. 6 described so far, the following effects can be produced as well as the effects described in the first embodiment. More specifically, the intake variable valve operating mechanism 46 is a mechanism that is capable of changing the opening timing and the closing timing of the intake valve 44 without changing the relation therebetween (that is, operating angle). Because of this, A change in the opening timing of the intake valve 44 for the adjustment of the O/L amount is accompanied by a change in the closing timing of the intake valve 44. If the closing timing of the intake valve 44 is changed, the actual compression ratio of the internal combustion engine 10 changes and ease of occurrence of knock changes. In contrast, such change does not occur to the adjustment of the O/L amount using the adjustment of the opening and closing timings of the exhaust valve 48. Thus, the present embodiment, which executes the adjustment of the opening and closing timings of the exhaust valve 48 in priority to (ahead of) the adjustment of the opening and closing timings of the intake valve 44 when adjusting the O/L amount to adjust the amount of the blow-by of fresh air, can prevent the fluctuation of the air-to-fuel ratio (the large dilution) of the exhaust gas due to the blow-by fresh air while preventing knock resistance from being impaired as much as possible.

In the third embodiment, which has been described above, the ECU 80 executes the aforementioned processing of steps 300 to 306, whereby the "overlap period adjusting means" according to the present invention is realized.

Meanwhile, in the first to third embodiments, which have been described above, in order to adjust the O/L period, the variable valve operating mechanisms 46 and 50 that are capable of continuously changing the opening and closing timings of the intake valve 44 and the exhaust valve, respectively, while fixing those operating angles. However, in relation to the controls explained in the first and second embodiments, the O/L period is not necessarily limited to one that is variable, and may be fixed at a value at which the blow-by of fresh air can occur depending on the operating condition. In addition, in relation to the controls explained in the first and second embodiments, a mechanism that is capable of changing only the opening timing of the intake valve 44 for the adjustment of the O/L period may be used. On the other hand, as for the exhaust valve 48, in relation to the control explained in any of the first to third embodiments, a mechanism that is capable of changing only the closing timing of the exhaust valve 48 for the adjustment of the O/L period may be used.

Moreover, in the first to third embodiments, description has been made taking as an example the internal combustion engine 10 that includes both of the port injection valve 38 and the in-cylinder injection valve 40. However, an internal combustion engine in the present invention is not limited to one having the aforementioned configuration, and may be one that only includes any one of a fuel injection valve capable of injecting fuel into an intake passage (for example, port injection valve) and an in-cylinder injection valve capable of directly injecting fuel into a cylinder.

Moreover, in the first to third embodiments, description has been made taking as an example the internal combustion engine 10 that includes the turbo-supercharger 24. However, a supercharger included in an internal combustion engine in the present invention is not limited to one having the aforementioned configuration, and may, for example, be one that uses the power from a crankshaft of an internal combustion engine or one that uses an electrically-driven motor.

### Description of symbols

- 10: internal combustion engine
- 12: piston
- 14: combustion chamber
- 16: intake passage
- 18: exhaust passage
- 22: air flow meter
- 24: turbo-supercharger
- 24a: compressor of turbo-supercharger
- 24b: turbine of turbo-supercharger
- 32: throttle valve
- 34: throttle upstream pressure sensor
- 36: throttle downstream pressure sensor
- 38: port injection valve
- 40: in-cylinder injection valve
- 42: spark plug
- 44: intake valve
- 46: intake variable valve operating mechanism
- 48: exhaust valve
- 50: exhaust variable valve operating mechanism
- 52: crankshaft
- 54: intake cam angle sensor
- 56: exhaust cam angle sensor
- 58: upstream catalyst
- 60: downstream catalyst
- 64: A/F sensor
- 66: O₂ sensor
- 76: crank angle sensor
- 80: ECU (Electronic Control Unit)

## Claims

1. A control apparatus for an internal combustion engine, comprising:
a supercharger that supercharges intake air;
a fuel injection valve that injects fuel into the internal combustion engine;
a catalyst that is installed in an exhaust passage and is capable of purifying exhaust gas;
injection timing setting means for, when blow-by of gas to the exhaust passage from an intake passage through a combustion chamber occurs or when a condition in which the blow-by of gas is likely to occur is satisfied, setting a fuel injection timing for the fuel injection valve so that fuel injection is executed after an exhaust valve is closed;
intake valve passing-through air amount obtaining means for obtaining an amount of air passing through an intake valve; and
fuel injection amount controlling means for setting a fuel injection amount so that when the blow-by of gas occurs or the condition in which the blow-by of gas is likely to occur is satisfied, an air-to-fuel ratio defined using the amount of air passing through the intake valve becomes a value leaner than a stoichiometric air-to-fuel ratio.

2. The control apparatus for the internal combustion engine according to claim 1,
wherein the control apparatus for the internal combustion engine further comprises catalyst temperature determination means for determining whether or not a temperature of the catalyst is higher than a predetermined value, and
wherein the fuel injection amount controlling means sets a fuel injection amount so that when the blow-by of gas occurs or the condition in which the blow-by of gas is likely to occur is satisfied and the temperature of the catalyst is higher than the predetermined value, the air-to-fuel ratio defined using the amount of air passing through the intake valve becomes a value leaner than the stoichiometric air-to-fuel ratio.

3. The control apparatus for the internal combustion engine according to claim 1 or 2,
wherein the control apparatus for the internal combustion engine further comprises an air-to-fuel ratio sensor that is installed in the exhaust passage on an upstream side of the catalyst to detect an air-to-fuel ratio of exhaust gas at an upstream of the catalyst, and
wherein the fuel injection amount controlling means includes air-to-fuel ratio lean-correction means for correcting the fuel injection amount so that the air-to-fuel ratio of exhaust gas detected by the air-to-fuel ratio sensor becomes a value leaner than the stoichiometric air-to-fuel ratio.

4. The control apparatus for the internal combustion engine according to claim 3,
wherein the air-to-fuel ratio lean-correction means further includes lean-degree determination means for, when an amount of the blow-by of gas is large, changing a target air-to-fuel ratio of exhaust gas to a value leaner than that when the amount of the blow-by of gas is small.

5. The control apparatus for the internal combustion engine according to claim 4,
wherein the lean-degree determination means changes the target air-to-fuel ratio of exhaust gas to a leaner value so that an air-to-fuel ratio defined using an in-cylinder charged air amount obtained by subtracting the amount of the blow-by of gas from the amount of air passing through the intake valve coincides with the stoichiometric air-to-fuel ratio.

6. The control apparatus for the internal combustion engine according to claim 1 or 2,
wherein the control apparatus for the internal combustion engine further comprises:
an air-to-fuel ratio sensor that is installed in the exhaust passage on an upstream side of the catalyst to detect an air-to-fuel ratio of exhaust gas at an upstream of the catalyst;
air-to-fuel ratio feedback controlling means for adjusting the fuel injection amount so that the air-to-fuel ratio of exhaust gas detected by the air-to-fuel ratio sensor becomes a predetermined target air-to-fuel ratio;
air-to-fuel ratio feedback suspend means for, when the blow-by of gas occurs or when the condition in which the blow-by of gas is likely to occur is satisfied, suspending an adjustment of the fuel injection amount by the air-to-fuel ratio feedback controlling means; and
in-cylinder air amount obtaining means for obtaining an in-cylinder charged air amount out of the amount of air passing through the intake valve, and
wherein the fuel injection amount controlling means sets the fuel injection amount so that when the blow-by of gas occurs or when the condition in which the blow-by of gas is likely to occur is satisfied, an air-to-fuel ratio defined using the in-cylinder charged air amount becomes the stoichiometric air-to-fuel ratio.

7. The control apparatus for the internal combustion engine according to any one of claims 1 to 6,
wherein the control apparatus for the internal combustion engine further comprises:
a variable valve operating mechanism that is capable of changing opening and closing timings of the intake valve and a closing timing of the exhaust valve; and
overlap period adjusting means for, when controlling an amount of the blow-by of gas by adjusting a valve overlap period during which an opening period of the intake valve and an opening period of the exhaust valve overlap with each other in a case where the blow-by of gas occurs or the condition in which the blow-by of gas is likely to occur is satisfied, executing an adjustment of the closing timing of the exhaust valve in priority to an adjustment of the opening and closing timings of the intake valve.

8. The control apparatus for the internal combustion engine according to any one of claims 1 to 7,
wherein the fuel injection valve includes a first fuel injection valve that injects fuel into the intake passage and a second fuel injection valve that injects fuel into a cylinder, and
wherein the control apparatus for the internal combustion engine further comprises fuel injection valve selection means for selecting the second fuel injection valve as a fuel injection valve that is used when fuel injection control is performed by the fuel injection timing setting means and the fuel injection amount controlling means.

9. The control apparatus for the internal combustion engine according to any one of claims 1 to 8,
wherein the control apparatus for the internal combustion engine further comprises:
gas blow-by determination means for determining whether or not the blow-by of gas occurs, or whether or not the condition in which the blow-by of gas is likely to occur is satisfied; and
an air-to-fuel ratio sensor that is installed in the exhaust passage on an upstream side of the catalyst to detect an air-to-fuel ratio of exhaust gas at an upstream of the catalyst, and
wherein the gas blow-by determination means determines that the blow-by of gas is occurring when the air-to-fuel ratio of the exhaust gas detected by the air-to-fuel ratio sensor is leaner than or equal to a sum of the stoichiometric air-to-fuel ratio and a predetermined value.
